# EUROPÄISCHE PATENTSCHRIFT

(11) **EP 2 239 683 B1**
(45) Veröffentlichungstag und Bekanntmachung des Hinweises auf die Patenterteilung: **31.07.2013**
(21) Anmeldenummer: 10159156.8
(22) Anmeldetag: 06.04.2010
(51) Int. Cl.: G06K 7/08, G06K 7/10, G01S 13/06, G01S 13/75

(54) **Verfahren zum Zuordnen von mindestens einem kontaktlos auslesbaren Datenträger zu mindestens einem sich räumlich bewegenden Bereich und Vorrichtung zum Ausführen des Verfahrens**
Device for allocating at least one contactless readable data carrier to at least one mobile area and device for carrying out the method
Procédé d'attribution d'au moins un support de données lisible sans contact à au moins un domaine se déplaçant dans l'espace et dispositif destiné à l'exécution du procédé

(30) Priorität: 06.04.2009 DE 102009016557
(43) Veröffentlichungstag der Anmeldung: 13.10.2010
(73) Patentinhaber: Enso Detego GmbH, 8020 Graz (AT)
(72) Erfinder: Gauby, Alexander, 8010 Graz (AT); Peter, Christof, 8054 Graz (AT); Goller, Michael, 8020 Graz (AT)
(74) Vertreter: Epping, Wilhelm

(56) Entgegenhaltungen:
- EP-A1- 1 300 797
- WO-A1-95/14938
- US-A1- 2007 030 150

## Beschreibung

Die Erfindung betrifft kontaktlos auslesbare Datenträger, wie zum Beispiel RF-ID Tags, bei denen Informationen, die in dem Datenträger abgespeichert sind, mit Hilfe eines Lesegeräts ausgelesen werden können. Derartige kontaktlose Datenträger eignen sich zum Kennzeichnen von Gegenständen und können eine Vielzahl von Informationen, wie zum Beispiel Artikelnummer, Hersteller, Lieferziel und Zeitangaben umfassen. Zum Transport werden die mit kontaktlosen Datenträgern versehenen Gegenstände häufig in einen gemeinsamen Behälter gelegt. Eine Herausforderung ist dabei festzustellen, welcher Gegenstand sich in welchem Behälter befindet.

Ein Lösung hier für besteht darin, dass festgestellt wird, wann sich ein neuer Behälter in der Nähe eines Lesegeräts befindet, wobei angenommen wird, dass sich alle auslesbaren Datenträger in dem neuen Behälter befinden. Nachteilig bei dieser Vorgehensweise ist jedoch, dass bei Lesegeräten mit großen Lesebereichen auch Datenträger aus benachbarten Behältern ausgelesen werden können. Es ist daher im Allgemeinen nicht möglich, einen Datenträger anhand seiner Auslesbarkeit einem gewissen Behälter zuzuordnen.

Als Abhilfe kann vorgesehen werden, dass der Lesebereich des Lesegeräts soweit reduziert wird, dass Datenträger aus nur einem der Behälter erfasst werden, oder, dass die Behälter genügend weit voneinander entfernt sind. Diese Maßnahmen führen jedoch dazu, dass die Anzahl der Datenträger, die in einem Behälter abgefragt werden können, durch den geringeren Lesebereich reduziert wird und der Durchsatz und die Auslastung des Transportmittels durch die größeren Abstände zwischen den Behälter sinken. Weiter löst diese Vorgehensweise auch nicht das Problem von zufälligen Reflexionen bei Abfragen, wodurch Datenträger auch aus entfernten Behältern auslesbar sind.

Es ist daher Aufgabe der Erfindung, ein Verfahren ohne die oben genannten Einschränkungen anzugeben, mit dem bestimmt werden kann, in welchem Bereich sich ein kontaktlos abfragbarer Datenträger befindet. Weiter soll eine Vorrichtung zum Ausführen des Verfahrens angegeben werden.

Die Erfindung löst diese Aufgabe durch ein Verfahren zum Zuordnen von mindestens einem kontaktlos auslesbaren Datenträger zu einem Bereich aus einer Vielzahl von sich räumlich bewegenden Bereichen, wobei der Datenträger sich mit den Bereichen bewegt, der Datenträger durch ein Lesegerät ausgelesen werden kann und beim Auslesen ein Antwortsignal mit einer Signalstärke erzeugt. Das Verfahren weist die Schritte auf: Erfassen eines jeweiligen Bereichszeitpunkts, wenn sich ein Bereich in der Nähe des Lesegeräts befindet, mindestens einer Auslese des Datenträgers, wobei der Datenträger mit den Bereichen so bewegt wird, dass Antwortsignale mit verschiedenen Signalstärken erzeugt werden können, Erfassen der Zeitpunkte und der Signalstärken der Antwortsignale des Datenträgers, Bestimmen des Zeitschwerpunkts der Antwortsignale des Datenträgers, und Zuordnen des Datenträgers zu dem Bereich, dessen Bereichszeitpunkt dem Zeitschwerpunkt der Antwortsignale des Datenträgers zeitlich am nächsten liegt. Die Zuordnung des Datenträgers zu einem Bereichszeitpunkt und somit zu einem Bereich wird durch Verwendung des Zeitschwerpunkts verbessert. Als Folge dessen kann mit Lesegeräten mit größeren Lesebereichen und mit geringeren räumlichen Abständen zwischen den Bereichen gearbeitet werden.

Vorteilhafterweise dringen die Bereiche und der Datenträger in den Lesebereich des Lesegeräts ein, durchqueren diesen und Verlassen anschließend den Lesebereich. Dies kann zum Beispiel dadurch erzielt werden, dass sich die Bereiche und der Datenträger auf einem Förderband befinden, welches den Lesebereich des Lesegeräts durchquert. Außerhalb des Lesebereichs können keine Antwortsignale erzeugt werden. Innerhalb des Lesebereichs nehmen die Signalstärken der Antwortsignale beim Annähern des Datenträgers an die Antenne des Lesegeräts zu und nehmen ab, wenn sich der Datenträger von der Antenne entfernt. Auf diese Weise steigen die Signalstärken an, bis sie ein Maximum erreicht haben und fallen anschließend wieder ab.

In einer Weiterbildung werden beim Bestimmen des Zeitschwerpunkts nur Antwortsignale des Datenträgers betrachtet, deren Signalstärke größer als ein vorgegebener Grenzwert ist. Durch Betrachten des zeitlichen Signalschwerpunkts bezüglich der Signalenergie kann der räumliche Bereich, in dem sich der Datenträger befindet, genauer bestimmt werden, wodurch eine zuverlässigere Zuordnung zu den Bereichen möglich ist. Weiter kann der Einfluss von Reflexionen, die meist geringere Signalstärken aufweisen, eliminiert werden, indem ein genügend großer Grenzwert vorgegeben wird.

In einer Weiterbildung werden vor dem Vergleich mit dem Grenzwert die Signalstärken durch Abziehen des Mittelwerts der Signalstärken und durch Teilen durch den Wert der größten Signalstärke normiert. Auf diese Weise können die Signalstärken der Antwortsignale für jeden Datenträger besser mit dem Grenzwert verglichen werden und auch Zeitschwerpunkte für Datenträger bestimmt werden, die aufgrund ihrer Orientierung im Lesebereich nur Antwortsignale mit geringen maximalen Signalstärken haben.

In einer Weiterbildung wird der Zeitschwerpunkt durch eine Mittelwertbildung der Quadrate der Produkte von Zeitpunkten und den zugehörigen Signalstärken bestimmt. Der Zeitschwerpunkt stellt somit einen Ausgleich durch die Zeitpunkte dar und repräsentiert, falls nur die signalstärkeren Antwortsignale betrachtet werden, den Zeitpunkt der größten Signalenergie.

In einer Weiterbildung werden die Bereiche und der Datenträger mit konstanter Geschwindigkeit bewegt. Durch die Bewegung mit konstanter Geschwindigkeit kann die räumliche Zuordnung des Datenträgers zu einem Bereich einfach durchgeführt werden.

In einer Weiterbildung wird der Datenträger mindestens zehnmal ausgelesen während er den Lesebereich durchquert. Durch Verringern der Geschwindigkeit oder durch Erhöhen der Ausleserate kann die Genauigkeit des Zeitschwerpunkts und somit auch die räumliche Genauigkeit des Datenträgers erhöht werden.

In einer Weiterbildung ist, falls nur ein Antwortsignal erzeugt wurde, der Zeitschwerpunkt der Zeitpunkt dieses Antwortsignals. Auf diese Weise kann bereits ein Antwortsignal ausreichen, um den Zeitschwerpunkt zu bestimmen.

In einer Weiterbildung erfolgt das Erfassen der Bereichzeitpunkte durch eine Lichtschranke. Mit einer Lichtschranke lässt sich genau erfassen, wann sich ein Bereich in der Nähe des Lesegeräts befindet, so dass Ungenauigkeiten bei Erfassen des Bereichzeitpunkts minimiert werden.

In einer Weiterbildung werden die Bereiche durch die Form von Behältern festgelegt. Die Behälter erlauben eine einfache und gleichzeitige Handhabung von mehreren Gegenständen, die mit einem Datenträger ausgerüstet sind. Gleichzeitig werden die Bereiche klar definiert, was sich auch auf die Genauigkeit beim Erfassen des Bereichzeitpunkts auswirkt.

In einer Weiterbildung befindet sich der mindestens eine Datenträger in einem Behälter. Der Datenträger bewegt sich somit zusammen mit dem Bereich, der durch den Behälter definiert wird.

In einer Weiterbildung sind die Behälter auf einem Transportband angeordnet. Das Transportband bewegt die Behälter und die Datenträger auf einfache Weise in den Lesebereich des Lesegeräts hinein und wieder heraus.

In einer Weiterbildung ist eine Antenne des Lesegeräts unter dem Transportband angeordnet und die Behälter werden direkt über die Antenne bewegt. Auf diese Weise kann die Lesegerätsendeleistung und Reflexion, die durch große Lesegerätsendeleistung entstehen, minimiert werden.

In einer Weiterbildung wird der Datenträger durch ein weiteres Lesegerät ausgelesen, wobei das weitere Lesegerät so angeordnet ist, dass der Datenträger nicht gleichzeitig von beiden Lesegeräten ausgelesen werden kann. Auf diese Weise kann festgestellt werden, ob ein Datenträger stationär ist und sich nicht bewegt. Bewegt sich der Datenträger, so kann er bei dem vorigen Lesegerät und dem weiteren Lesegerät ausgelesen werden. Falls er nur von einem Lesegerät ausgelesen wird, so ist er stationär.

In einer Weiterbildung wird der Datenträger als sich bewegend betrachtet, falls der Zeitschwerpunkt durch das Lesegerät einen vorgegebnen zeitlichen Abstand vor dem Zeitpunkt des ersten Auslesens durch ein weiteres Lesegeräts liegt. In diesem Fall ist es möglich, dass das Lesegerät und das weitere Lesegerät den Datenträger gleichzeitig auslesen können, so dass die Lesegeräte räumlich enger zusammen angeordent werden können.

In einer Weiterbildung werden Zeitschwerpunkte nur für Datenträger bestimmt, die von beiden Lesegeräten nacheinander ausgelesen wurden. Durch diese Maßnahme wird sichergestellt, dass alle Antwortsignale des Datenträgers bereits vorhanden sind, bevor der Zeitschwerpunkt bestimmt wird. Gleichzeitig wird die erforderliche Datenverarbeitungsleistung reduziert, da für stationäre Datenträger kein Zeitschwerpunkt bestimmt wird.

Die Erfindung sieht weiter eine Vorrichtung zum Ausführen des Verfahrens nach einem der Verfahrensansprüche vor, umfassend: Mindestens einen Datenträger, mindestens ein Lesegerät zum Auslesen des Datenträgers, ein Fördermittel zum Bewegen des mindestens einen Bereichs und des Datenträgers, Mittel zum Erfassen von Bereichszeitpunkten, Mittel zum Bestimmen von Zeitschwerpunkten von jeweils mindestens einem Antwortsignal der Datenträger und Mittel zum Zuordnen der Zeitschwerpunkte zu den Bereichsschwerpunkten.

Die Erfindung wird nachfolgend anhand von Ausführungsbeispielen mit Hilfe der Figuren dargestellt. In den Figuren zeigen:
- Figur 1: ein Ausführungsbeispiel einer Vorrichtung, bei der ein kontaktlos auslesbarer Datenträger einem sich räumlich bewegenden Bereich zugeordnet wird,
- Figur 2: ein Beispiel von Zeitpunkten und Signalstärken von Antwortsignalen eines Datenträgers, und
- Figur 3: ein Beispiel für die Zuordnung von Zeitschwerpunkten zu Bereichszeitpunkten.

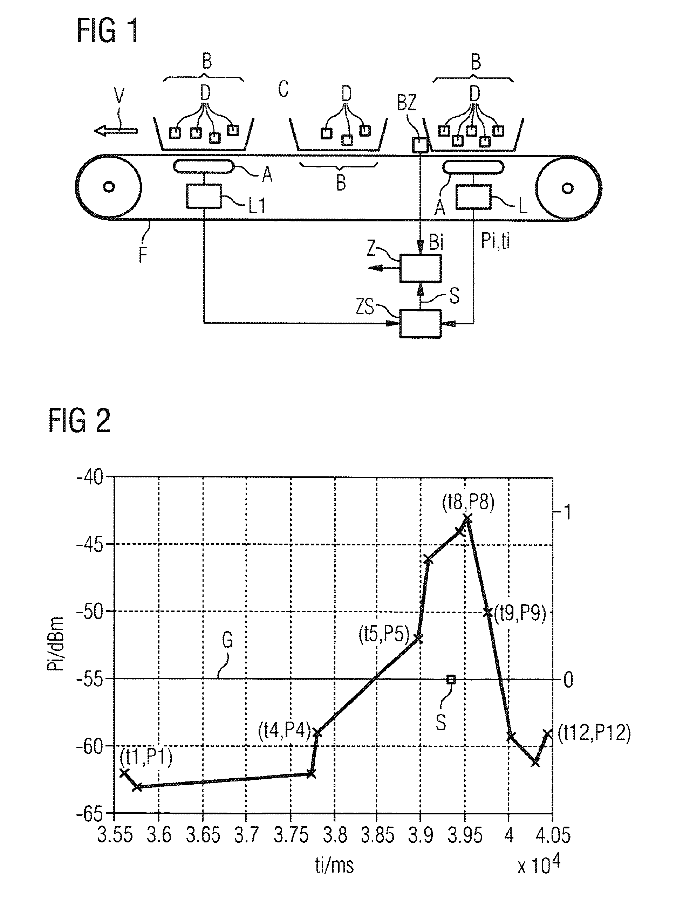

Figur 1 zeigt eine Vorrichtung mit der kontaktlos auslesbare Datenträger D einem sich räumlich bewegenden Bereich B zugeordnet werden können. Die Daten, die in dem Datenträger D gespeichert sind, können im Falle von RF-ID-Tags mit Hilfe von elektromagnetischer Strahlung ausgelesen werden. Dazu sendet ein Lesegerät L über eine Antenne A ein Auslesesignal an den Datenträger D. Der Datenträger D sendet darauf ein Antwortsignal zu dem Zeitpunkt ti mit der Signalstärke Pi zurück. Der Zeitpunkt ti hängt dabei unter anderem davon ab, wie viele Datenträger D sich in dem Lesebereich des Lesegeräts L befinden. Die Signalstärke Pi ist abhängig von der Entfernung des Datenträgers D zur Antenne A und von der Orientierung des Datenträgers D relativ zur Antenne A.

Anstelle von RF-ID-Tags können auch andere kontaktlos auslesbare Datenträger eingesetzt werden, wie zum Beispiel induktiv abfragbare Datenträger. Das Lesegerät L und die Antenne A müssen dann entsprechend angepasst werden.

Die Datenträger D werden gewöhnlich an Gegenständen angebracht, um diese zu identifizieren, wobei die Gegenstände in Figur 1 nicht gezeigt sind. In der Praxis tritt es häufig auf, dass die Gegenstände sich in einem räumlich abgegrenzten Bereich B befinden. Dieser Bereich B kann zum Beispiel dadurch vorgegeben werden, dass die Gegenstände mit den Datenträgern sich in einem Behälter C befinden oder zum Beispiel in voneinander getrennten Haufen auf einen Transportband liegen. Gezeigt in Figur 1 sind drei Bereiche B; es können jedoch auch mehr oder weniger sein. Die Bereiche B und die Datenträger D werden durch ein Fördermittel F, welches zum Beispiel ein Transportband sein kann, mit einer Geschwindigkeit v bewegt. Da die Bereiche B räumlich voneinander getrennt sind, können diese unterschiedlich weiterbehandelt werden und zum Beispiel auf unterschiedliche Transportbänder verteilt werden.

Die Bereiche B und die Datenträger D werden durch das Transportband F in den Lesebereich des Lesegeräts L hineingeführt und verlassen diesen anschließend. Wenn ein Bereich B sich in der Nähe des Lesegeräts L befindet, wird dieser Zeitpunkt Bi durch einen Bereichszeitpunkterfasser BZ erfasst. Der Bereichszeitpunkterfasser BZ kann zum Beispiel eine Lichtschranke sein, die durch die Gegenstände oder den Behälter C unterbrochen wird. Während sich der Datenträger D in dem Lesebereich des Lesegeräts L befindet, wird er ausgelesen. Durch die Bewegung des Datenträgers D ändert sich dessen Kopplung zur Antenne A, so dass Antwortsignale mit unterschiedlichen Signalstärken Pi erzeugt werden.

Jeder Datenträger D, der durch das Fördermittel F bewegt wird, kann anschließend durch ein weiteres Lesegerät L1 erkannt werden. Das weitere Lesegerät L1 ist dabei so angeordnet, dass der Datenträger D nicht gleichzeitig von dem Lesegerät L ausgelesen werden kann. Auf diese Weise wird sichergestellt, dass Datenträger D, die sich stationär in der Nähe von einem der beiden Lesegeräte L oder L1 befinden, nicht zugeordnet werden. Weiter kann nach dem Erkennen durch das weitere Lesegerät L1 sichergestellt werden, dass eine Auswertung der Zeitpunkte ti und der Signalstärken Pi erst dann erfolgt, wenn keine weiteren Antwortsignale eines Datenträgers D durch das Lesegerät L zu erwarten sind.

Alternativ kann ein Datenträger als sich bewegend erkannt werden, falls der Zeitschwerpunkt S durch das Lesegerät L einen vorgegebnen zeitlichen Abstand vor dem Zeitpunkt des ersten Auslesens durch das weiteres Lesegeräts L1 liegt. Der vorgegebene zeitliche Abstand kann dabei von der Zeit abhängig sein, die der Datenträger für den Weg vom Lesegerät L zum weiteren Lesegerät L1 braucht. Ein stationärer Datenträger wird nur von einem Lesegerät ausgelesen.

Mit Hilfe eines Zeitschwerpunktbestimmers ZS wird für jeden Datenträger D, der an beiden Lesegeräten L und L1 erfasst wurde, ein Zeitschwerpunkt S ermittelt. Ein Zuordner Z ordnet den Zeitschwerpunkten S jeweils einen Bereichszeitpunkt Bi zu. Datenträger D aus unterschiedlichen Bereichen B, die gleichzeitig von dem Lesegerät L ausgelesen werden, können so dem richtigen Bereich B zugeordnet werden, ohne dass die Bereiche B räumlich weit voneinander getrennt werden müssen oder der Lesebereich des Lesegeräts L stark eingeschränkt werden muss.

Figur 2 zeigt ein Beispiel von Zeitpunkten ti und Signalstärken Pi von Antwortsignalen eines Datenträgers D, der sich zunächst außerhalb des Lesebereichs des Lesegeräts L befindet, dann in den Lesebereich eintritt, und diesen anschließend verlässt. Das erste Antwortsignal erfolgt zum Zeitpunkt t1 und hat die Signalstärke P1. Zeitlich vorher gab es keine Antwortsignale, da sich der Datenträger D außerhalb des Lesebereichs befand. Da sich der Datenträger D noch weit von der Antenne A des Lesegeräts L befindet, ist die Signalstärke P1 gering. Das Fördermittel F bewegt den Datenträger D weiter in Richtung der Antenne A, so dass ab dem Zeitpunkt t4 bereits ein Anstieg der Signalstärke P4 zu beobachten ist. Zum Zeitpunkt t8 weist das Antwortsignal die maximale Signalstärke P8 auf. Der Datenträger D befindet sich dabei direkt über der Antenne A, so dass die Entfernung zur Antenne A am geringsten ist. Anschließend wird der Datenträger D wieder von der Antenne A entfernt, wodurch die Signalstärken Pi abfallen. Ein letztes Antwortsignal wird zum Zeitpunkt t12 erzeugt, danach ist der Datenträger D außerhalb des Lesebereichs des Lesegeräts L. Der Abstand zwischen den Zeitpunkten ti, zu denen die Daten ausgelesen werden, ist nicht konstant. Im Wesentlichen werden die Zeitpunkte ti durch die Anzahl der Datenträger D, die sich gleichzeitig in dem Lesebereich des Lesegeräts L befinden und dem eingesetzten Anti-Kollisionsverfahren bestimmt. Die Zeitpunkte ti und die Signalstärke Pi können durch das Lesegerät L erfasst werden.

Aus den Zeitpunkten ti und den Signalstärken Pi kann auf die Position des Datenträgers D geschlossen werden. Eine konstante Geschwindigkeit v der Bewegung des Datenträgers D ist dabei nicht erforderlich, falls die Geschwindigkeit getrennt erfasst wird oder die Bereichszeitpunkte Bi so gewählt werden, dass sie für eine eindeutige Bezugsnahme der Zeitpunkte ti geeignet sind.

Um die Position des Datenträgers D zu bestimmen, ist es sinnvoll einen Zeitschwerpunkt S zu bestimmen. Dieser kann zum Beispiel durch eine Mittelwertbildung über alle Zeitpunkte ti erfolgen. Eine genauere Bestimmung der Position des Datenträgers ist möglich, falls die Mittelwertbildung nur Zeitpunkte ti umfasst, deren Signalstärken Pi sich um die maximale Antwortsignale herum befinden. Auf diese Weise werden Signalstärken, die durch Störungen oder Reflexionen auftreten, nicht berücksichtigt. Die Auswahl der Zeitpunkte ti kann zum Beispiel dadurch erfolgen, dass nur Signalstärken Pi berücksichtigt werden, die größer als ein vorgegebener Grenzwert G sind. In Figur 2 ist ein Grenzwert von -55 dBm eingezeichnet, wobei die Signalstärken P5 bis P9 über diesem liegen, so dass nur die Zeitpunkte t5 bis t9 für die Ermittlung des Zeitschwerpunkts S betrachtet werden.

Problematisch bei einer absoluten Vorgabe des Grenzwertes G in dBm ist, dass die Signalstärken Pi aufgrund der Orientierung der Datenträger D im Lesebereich signifikant von einem Datenträger zu einem anderen Datenträger abweichen. So könnte ein Datenträger D, der nur eine geringe Kopplung zur Antenne A hat, den gleichen Verlauf wie in Figur 2 aufweisen, und dabei eine maximale Signalstärke Pi kleiner als -55 dBm haben. In diesem Fall würden keine der Antwortsignale berücksichtigt werden. Es ist daher sinnvoll, die Signalstärken Pi zu normieren. Dies könnte zum Beispiel durch das Abziehen eines Mittelwertes der Signalstärken Pi und einer anschließenden Teilung der Werte durch den maximalen Wert erfolgen. Auf der rechten Seite von Figur 2 ist eine derartig normierte Skala angebracht. Die maximale Signalstärke P8 weist nun den Wert 1 auf, und der Mittelwert den Wert 0. Der Grenzwert ist nun G = 0 und es werden wieder die Signalpunkte t5 bis t9 für die Zeitschwerpunktbestimmung berücksichtigt. Selbstverständlich können auch andere Grenzwerte G eingesetzt werden, um den Bereich um das Maximum der Signalstärken einzuschränken. Der Zeitschwerpunkt S ergibt sich in Figur 2 zu 3,94 x 10⁴ ms. Durch die Beschränkung auf die Antwortsignale mit größeren Signalstärken ist es möglich, die Position des Datenträgers D weiter in ihrer Genauigkeit zu verbessern, da die größeren Signalstärken Pi zu Zeitpunkten auftreten, wenn der Abstand des Datenträgers zur Antenne A minimal ist. Die Mittelwertbildung kann über die Quadrate der Produkte der Zeitpunkte ti mit den zugehörigen Signalstärken Pi durchgeführt werden und optional noch auf die gesamte Signalenergie normiert werden.

Falls nur ein Antwortsignal ermittelt wurde, zum Beispiel nur das Antwortsignal zum Zeitpunkt t8 mit der Signalstärke P8, so ergibt sich der Zeitschwerpunkt S aus dem Zeitpunkt des Antwortsignals, also zu t8. Es ist kein Vergleich mit einem Grenzwert G, keine Normierung und keine Mittelwertbildung notwendig.

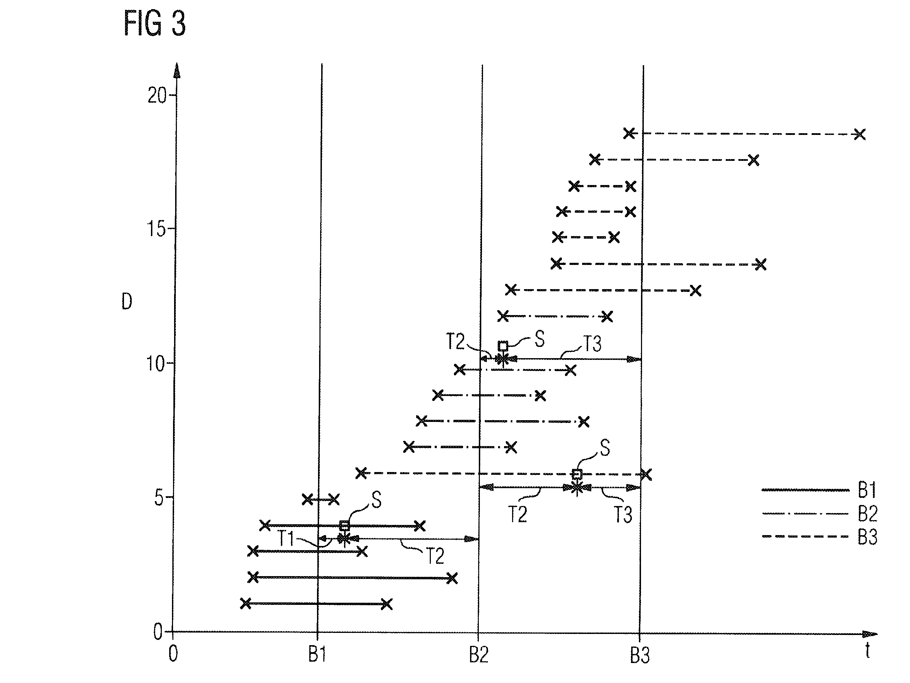

Figur 3 zeigt Beispiele für die Zuordnung von Zeitschwerpunkten S zu Bereichszeitpunkten Bi, i = 1, 2 und 3 durch den Zuordner Z. Es sind jeweils die Zeitpunkte des ersten und des letzten Antwortsignals von 19 Datenträgern D aufgetragen, wobei die Datenträger D anhand des zeitlichen Auftretens des ersten Antwortsignals sortiert sind. Der Übersicht halber sind nicht mehr alle Zeitpunkt ti wie in Figur 2 gezeigt, sondern nur das erste Antwortsignal und das letzte Antwortsignal. Auch sind keine Signalstärken Pi eingezeichnet, da es in Figur 3 primär um die Zuordnung der Zeitschwerpunkte S zu den Bereichszeitpunkten Bi geht. Für den vierten, sechsten und elften Datenträger sind die Zeitschwerpunkte S eingezeichnet, wobei für den elften Datenträger D nur ein einziges Antwortsignal erfasst wurde. Die Zeitschwerpunkte S wurden nach einem der Verfahren, die mit Hilfe der Figur 2 beschrieben werden, bestimmt.

Zusätzlich zu den ersten und letzten Zeitpunkten der Antwortsignale für jeden Datenträger sind in Figur 3 die Bereichszeitpunkte B1, B2 und B3 eingetragen. Ein Bereichszeitpunkt Bi wird erfasst, wenn sich ein Bereich B in der Nähe des Lesegeräts L befindet. Die drei Bereichszeitpunkte B1, B2 und B3 können zum Beispiel durch das Erfassen der Bereiche B der drei Behälter C in Figur 1 mittels Bereichszeitpunkterfasser BZ bestimmt werden.

Die Zuordnung der Datenträger D zu den einzelnen Bereichszeitpunkten Bi und damit zu den Bereichen B, zu denen die Bereichszeitpunkte Bi gehören, ist durch eine durchgezogene Linie für den Bereichszeitpunkt B1, eine Strichpunktlinie für den Bereichszeitpunkt B2 und eine gestrichelte Linie für den Bereichszeitpunkt B3 veranschaulicht.

Wie in Figur 3 erkennbar, kann ein Datenträger D in mehr als einem Bereich B auslesbar sein, siehe zum Beispiel den sechsten Datenträger, der sowohl im Bereich mit den Bereichszeitpunkt B2 oder B3 liegen könnte. Um den Datenträger D dem korrekten Bereich B zuzuordnen, wird jeweils der zeitliche Abstand des Zeitschwerpunkts S zu den beiden nächstliegenden Bereichszeitpunkten Bi berechnet. Anschließend wird der Datenträger D dem Bereich B zugeordnet, dessen Bereichszeitpunkt Bi seinen Zeitschwerpunkt S zeitlich am nächsten liegt. Für den vierten Datenträger ist der Abstand T1 des Zeitschwerpunkts S zum Bereichszeitpunkt B1 kleiner als der zeitliche Abstand zwischen dem Zeitschwerpunkt S und dem Bereichszeitpunkt B2. Der vierte Datenträger wird also dem Bereich zugewiesen, der das Erfassen des Bereichzeitpunkts B1 ausgelöst hat.

Für den sechsten Datenträger liegt der Zeitschwerpunkt S relativ weit hinten, so dass dieser dem Bereichszeitpunkt B3 zugeordnet wird und nicht dem Bereichszeitpunkt B2, obwohl der sechste Datenträger sein erstes Antwortsignal bereits liefert, bevor andere Datenträger aus dem Bereich mit dem früheren Bereichszeitpunkt B2 ausgelesen werden. In einem herkömmlichen Zuordnungsverfahren wäre es daher wahrscheinlich, dass der sechsten Datenträger dem Bereich mit dem Bereichszeitpunkt B2 zugeordnet werden würde.

Das sehr frühe erste Antwortsignal des sechsten Datenträgers ist auf Reflexionen zurückzuführen, die durch reflexionsmindernde Maßnahmen reduziert werden könnten. Es zeigt sich hier, dass die Einschränkung auf Antwortsignalen, die um das Maximum der Signalstärken liegen, sinnvoll ist, da bei Berücksichtigung aller Zeitpunkte ti der Zeitschwerpunkt S zu einem früheren Zeitpunkt aufgetreten wäre und der sechste Datenträger so fälschlicherweise dem Bereich B mit dem Bereichszeitpunkt B2 zugeordnet worden würde.

### Bezugszeichenliste

- A: Antenne
- B: Bereich
- Bi: Bereichszeitpunkte
- BZ: Bereichszeitpunkterfasser
- C: Behälter
- D: Datenträger
- F: Fördermittel, Transportband
- G: Grenzwert
- L: Lesegerät
- L1: weiteres Lesegerät
- Pi: Signalstärke der Antwortsignale
- S: Zeitschwerpunkt
- ti: Zeitpunkte der Antwortsignale
- Ti: Zeit zwischen Zeitschwerpunkt S zum Bereichszeitpunkt Bi
- v: Geschwindigkeit
- ZS: Zeitschwerpunktbestimmer
- Z: Zuordner

## Patentansprüche

1. Verfahren zum Zuordnen von mindestens einem kontaktlos auslesbaren Datenträger (D) zu einem Bereich (B) aus einer Vielzahl von sich räumlich bewegenden Bereichen (B), wobei
- der Datenträger (D) sich mit den Bereichen (B) bewegt,
- der Datenträger (D) durch ein Lesegerät (L) ausgelesen werden kann und beim Auslesen ein Antwortsignal mit einer Signalstärke (Pi) erzeugt,
aufweisend die Schritte:
- Erfassen eines jeweiligen Bereichszeitpunkts (Bi), wenn sich ein Bereich (B) in der Nähe des Lesegeräts (L) befindet,
- Mindestens einer Auslese des Datenträgers (D), wobei der Datenträger (D) mit den Bereichen (B) so bewegt wird, dass Antwortsignale mit verschiedenen Signalstärken (Pi) erzeugt werden können,
- Erfassen der Zeitpunkte (ti) und der Signalstärken (Pi) der Antwortsignale des Datenträgers (D),
- Bestimmen des Zeitschwerpunkts (S) der Antwortsignale des Datenträgers (D), und
- Zuordnen des Datenträgers (D) zu dem Bereich (B), dessen Bereichszeitpunkt (Bi) dem Zeitschwerpunkt (S) der Antwortsignale des Datenträgers (D) zeitlich am nächsten liegt.

2. Verfahren nach Anspruch 1,
**dadurch gekennzeichnet, dass**
die Bereiche (B) und der Datenträger (D) in den Lesebereich des Lesegeräts (L) eindringen, diesen durchqueren und anschließend der Lesebereich verlassen.

3. Verfahren nach Anspruch 1 oder 2,
**dadurch gekennzeichnet, dass**
beim Bestimmen des Zeitschwerpunkts (S) nur Antwortsignale des Datenträgers (D) betrachtet werden, deren Signalstärke (Pi) größer als ein vorgegebener Grenzwert (G) ist.

4. Verfahren nach Anspruch 3,
**dadurch gekennzeichnet, dass**
vor dem Vergleich mit dem Grenzwert (G) die Signalstärken (Pi) durch Abziehen des Mittelwerts der Signalstärken und durch Teilen durch den Wert der größten Signalstärke normiert werden.

5. Verfahren nach einem der vorigen Ansprüche,
**dadurch gekennzeichnet, dass**
der Zeitschwerpunkt (S) durch eine Mittelwertbildung der Quadrate der Produkte von Zeitpunkten (ti) und den zugehörigen Signalstärken (Pi) bestimmt wird.

6. Verfahren nach einem der vorigen Ansprüche,
**dadurch gekennzeichnet, dass**
die Bereiche (B) und der Datenträger (D) mit konstanter Geschwindigkeit (v) bewegt werden.

7. Verfahren nach einem der Ansprüche 2 bis 6,
**dadurch gekennzeichnet, dass**
der Datenträger (D) mindestens zehnmal ausgelesen wird während er den Lesebereich durchquert.

8. Verfahren nach Anspruch 2, 6 oder 7,
**dadurch gekennzeichnet, dass**,
falls nur ein Antwortsignal erzeugt wurde, der Zeitschwerpunkt (S) der Zeitpunkt (ti) diesen Antwortsignals ist.

9. Verfahren nach einem der vorigen Ansprüche,
**dadurch gekennzeichnet, dass**
das Erfassen der Bereichszeitpunkte (Bi) durch eine Lichtschranke (BZ) erfolgt.

10. Verfahren nach einem der vorigen Ansprüche,
**dadurch gekennzeichnet, dass**
die Bereiche (B) durch die Form von Behältern (C) festgelegt werden.

11. Verfahren nach Anspruch 10,
**dadurch gekennzeichnet, dass**
sich der mindestens eine Datenträger (D) in einem Behälter (C) befindet.

12. Verfahren nach Anspruch 11,
**dadurch gekennzeichnet, dass**
die Behälter (C) auf einem Transportband (F) angeordnet sind.

13. Verfahren nach Anspruch 12,
**dadurch gekennzeichnet, dass**
eine Antenne (A) des Lesegeräts (L) unter dem Transportband (F) angeordnet ist und die Behälter (C) direkt über die Antenne (A) bewegt werden.

14. Verfahren nach einem der vorigen Ansprüche,
**dadurch gekennzeichnet, dass**
der Datenträger (D) durch ein weiteres Lesegerät (L1) ausgelesen wird, wobei das weitere Lesegerät (L1) so angeordnet ist, dass der Datenträger (D) nicht gleichzeitig von beiden Lesegeräten (L, L1) ausgelesen werden kann.

15. Verfahren nach Anspruch 14,
**dadurch gekennzeichnet, dass**
Zeitschwerpunkte (S) nur für Datenträger (D) bestimmt werden, die von beiden Lesegeräten (L1) nacheinander ausgelesen wurden.

16. Verfahren nach einem der Ansprüche 1 bis 13,
**dadurch gekennzeichnet, dass**
der Datenträger (D) als sich bewegend betrachtet wird, falls der Zeitschwerpunkt (S) durch das Lesegerät (L) einen vorgegebnen zeitlichen Abstand vor dem Zeitpunkt des ersten Auslesens durch ein weiteres Lesegeräts (L1) liegt.

17. Vorrichtung zum Ausführen des Verfahrens nach einem der Ansprüche 1 bis 16, umfassend:
- mindestens einen Datenträger (D),
- mindestens ein Lesegerät (L) zum Auslesen des Datenträgers (D),
- ein Fördermittel (F) zum Bewegen von mindestens einem Bereich (B) und des Datenträgers (D),
- Mittel (BZ) zum Erfassen von Bereichszeitpunkten (Bi),
- Mittel (ZS) zum Bestimmen von Zeitschwerpunkten (S) von jeweils mindestens einem Antwortsignal der Datenträger (D), und
- Mittel (Z) zum Zuordnen der Zeitschwerpunkte (S) zu den Bereichszeitpunkten (Bi).

## Claims

1. A method of assigning at least one data carrier (D) able to be read out in a contact-less manner to an area (B) of a plurality of areas (B) moving in space, wherein
- the data carrier (D) moves together with the areas (B),
- the data carrier (D) can be read out by a reading device (L) and generates a response signal with a signal strength (Pi) when being read out,
comprising the steps:
- detecting a respective area point in time (Bi) when an area (B) is in the vicinity of the reading device (L),
- at least one process of reading out the data carrier (D), the data carrier (D) being moved together with the areas (B) in such a manner that response signals with differing signal strengths (Pi) can be generated,
- detecting the points in time (ti) and the signal strengths (Pi) of the response signals of the data carri er (D),
- determining the balance point in time(S) of the response signals of the data carrier (D), and
- assigning the data carrier (D) to the area (B) whose area point in time (Bi) is closest to the balance point in time (S) of the response signals of the data carrier (D) in terms of time.

2. The method according to claim 1,
**characterized in that**
the areas (B) and the data carrier (D) enter the reading area of the reading device (L), pass through it and subsequently leave the reading area.

3. The method according to claim 1 or 2,
**characterized in that**
only those response signals of the data carrier (D) are considered during determining the balance point in time (S) whose signal strength (Pi) is larger than a predefined limit value (G).

4. The method according to claim 3,
**characterized in that**
the signal strengths (Pi) are standardized by subtracting the average value of the signal strengths and dividing them by the value of the largest signal strength prior to the process of comparing with the limit value (G).

5. The method according to any of the preceding claims,
**characterized in that**
the balance point in time (S) is determined by averaging the squares of the products of points in time (ti) and the related signal strengths (Pi).

6. The method according to any of the preceding claims,
**characterized in that**
the areas (B) and the data carriers (D) are moved with constant velocity (v).

7. The method according to any of the claims 2 to 6,
**characterized in that**
the data carrier (D) is read out at least ten times during its passage through the reading area.

8. The method according to claim 2, 6 or 7,
**characterized in that**,
in case only one response signal has been generated, the balance point in time (S) is the point in time (ti) of said response signal.

9. The method according to any of the preceding claims,
**characterized in that**
detecting the area point in time (Bi) is accomplished by a light barrier (BZ).

10. The method according to any of the preceding claims,
**characterized in that**
the areas (B) are defined by the shape of containers (C).

11. The method according to claim 10,
**characterized in that**
the at least one data carrier (D) is situated in a container (C).

12. The method according to claim 11,
**characterized in that**
the containers (C) are arranged on a conveyor belt (F).

13. The method according to claim 12,
**characterized in that**
an antenna (A) of the reading device (L) is arranged underneath the conveyor belt (F) and the containers (C) are moved directly above the antenna (A).

14. The method according to any of the preceding claims,
**characterized in that**
the data carrier (D) is read out by an additional reading device (L1), the additional reading device (L1) being arranged such that the data carrier (D) can not be simultaneously read out by the two reading devices (L, L1).

15. The method according to claim 14,
**characterized in that**
balance points in tme (S) are only determined for data carriers (D) which have been read out successively by both reading devices (L, L1).

16. The method according to any of the claims 1 to 13, **characterized in that**
the data carrier (D) is considered as moving if the balance point in time (S) through the reading device (L) is a predetermined temporal distance ahead the point in time of the first reading process carried out by an additional reading device (L1).

17. A device for carrying out the method according to any of the claims 1 to 16, comprising:
- at least one data carrier (D),
- at least one reading device (L) for reading out the data carrier (D),
- a conveyor means (F) for moving at least one area (B) and the data carrier (D),
- means (BZ) for detecting area points in time (Bi),
- means (ZS) for determining balance points of time (S) of respectively at least one response signal of the data carriers (D), and
- means (Z) for assigning the balance points of time (S) to the area points in time (Bi).

## Revendications

1. Procédé d'attribution d'au moins un support de données (D) lisible sans contact à un domaine (B) parmi une multitude de domaines (B) se déplaçant dans l'espace, où
- le support de données (D) se déplace avec les domaines (B),
- le support de données (D) peut être lu par un appareil de lecture (L) et un signal de réponse d'une intensité de signal (Pi) est généré,
présentant les étapes :
- acquisition d'un moment de domaine respectif (Bi) lorsqu'un domaine (B) se trouve à proximité de l'appareil de lecture (L),
- d'au moins une lecture du support de données (D), le support de données (D) étant déplacé avec les domaines (B) de telle façon que des signaux de réponse de diverses intensités de signal (Pi) puissent être générés,
- acquisition des moments (ti) et des intensités de signal (Pi) des signaux de réponse du support de données (D),
- détermination du centre temporel (S) des signaux de réponse du support de données (D), et
- attribution du support de données (D) au domaine (B) dont le moment de domaine (Bi) est temporellement le plus proche du centre temporel (S) des signaux de réponse du support de données (D).

2. Procédé selon la revendication 1,
**caractérisé en ce que**
les domaines (B) et le support de données (D) pénètrent dans le domaine de lecture de l'appareil de lecture (L), traversent celui-ci et quittent ensuite le domaine de lecture.

3. Procédé selon la revendication 1 ou 2,
**caractérisé en ce que**
lors de la détermination du centre temporel (S), seuls sont considérés des signaux de réponse du support de données (D) dont l'intensité de signal (Pi) est supérieure à une valeur limite (G) prédéfinie.

4. Procédé selon la revendication 3,
**caractérisé en ce que**
avant la comparaison avec la valeur limite (G), les intensités de signal (Pi) sont normées par soustraction de la valeur moyenne des intensités de signal et par division par la valeur de la plus grande intensité de signal.

5. Procédé selon l'une des revendications précédentes,
**caractérisé en ce que**
le centre temporel (S) est déterminé par une formation de valeur moyenne des carrés des produits de moments (ti) et des intensités de signal associées (Pi).

6. Procédé selon l'une des revendications précédentes,
**caractérisé en ce que**
les domaines (B) et le support de données (D) sont déplacés à vitesse constante (v).

7. Procédé selon l'une des revendications 2 à 6,
**caractérisé en ce que**
le support de données (D) est lu au moins dix fois pendant qu'il traverse le domaine de lecture.

8. Procédé selon la revendication 2, 6 ou 7,
**caractérisé en ce que**
si un seul signal de réponse a été généré, le centre temporel (S) est le moment (ti) de ce signal de réponse.

9. Procédé selon l'une des revendications précédentes,
**caractérisé en ce que**
l'acquisition des moments de domaine (Bi) est effectuée par une barrière lumineuse (BZ).

10. Procédé selon l'une des revendications précédentes,
**caractérisé en ce que**
les domaines (B) sont définis par la forme de récipients (C).

11. Procédé selon la revendication 10,
**caractérisé en ce que**
l'au moins un support de données (D) se trouve dans un récipient (C).

12. Procédé selon la revendication 11,
**caractérisé en ce que**
les récipients (C) sont disposés sur une bande transporteuse (F).

13. Procédé selon la revendication 12,
**caractérisé en ce que**
une antenne (A) de l'appareil de lecture (L) est disposée sous la bande transporteuse (F) et les récipients (C) sont déplacés directement au-dessus de l'antenne (A).

14. Procédé selon l'une des revendications précédentes,
**caractérisé en ce que**
le support de données (D) est lu par un appareil de lecture supplémentaire (L1), l'appareil de lecture supplémentaire (L1) étant disposé de telle façon que le support de données (D) ne puisse pas être lu par les deux appareils de lecture (L, L1) en même temps.

15. Procédé selon la revendication 14,
**caractérisé en ce que**
des centres temporels (S) ne sont déterminés que pour des supports de données (D) qui ont été lus par les deux appareils de lecture (L1) l'un après l'autre.

16. Procédé selon l'une des revendications 1 à 13, **caractérisé en ce que**
le support de données (D) est considéré comme se déplaçant si le centre temporel (S) par l'appareil de lecture (L) est situé à une distance temporelle prédéfinie avant le moment de la première lecture par un appareil de lecture supplémentaire (L1).

17. Dispositif destiné à réaliser le procédé selon l'une des revendications 1 à 16, comprenant :
- au moins un support de données (D),
- au moins un appareil de lecture (L) pour la lecture du support de données (D),
- un moyen de convoyage (F) pour le déplacement d'au moins un domaine (B) et du support de données (D),
- des moyens (BZ) pour acquérir des moments de domaine (Bi),
- des moyens (ZS) pour déterminer des centres temporels (S) de respectivement au moins un signal de réponse des supports de données (D), et
- des moyens (Z) pour affecter les centres temporels (S) aux moments de domaine (Bi).
